# FASCICULE DE BREVET EUROPEEN

(11) **EP 1 044 593 B1**
(45) Date de publication et mention de la délivrance du brevet: **09.02.2005**
(21) Numéro de dépôt: 00440091.7
(22) Date de dépôt: 04.04.2000
(51) Int. Cl.: A01D 34/66

(54) **Faucheuse**
Mähmaschine
Mowing machine

(30) Priorité: 16.04.1999 FR 9904928
(43) Date de publication de la demande: 18.10.2000
(73) Titulaire: KUHN S.A., 67706 Saverne Cedex (FR)
(72) Inventeur: Wattron, Bernard, 67700 Haegen (FR); Walch, Martin, 67490 Dettwiller (FR)
(74) Mandataire: Andres, Jean-Claude

(56) Documents cités:
- EP-A- 0 461 492
- EP-A- 0 634 089
- FR-A- 2 110 911
- FR-A- 2 759 531
- FR-A- 2 759 533

## Description

La présente invention se rapporte à une machine de coupe comportant :
- un châssis destiné à être lié à un véhicule moteur ;
- un dispositif de coupe comprenant des organes de coupe et étant destiné à occuper :
   * au moins une position de travail dans laquelle il repose au moins sensiblement sur le sol et dans laquelle il est destiné à suivre le relief dudit sol,
   * au moins une position de transport dans laquelle il s'étend au-dessus dudit sol,
- un dispositif de liaison liant ledit dispositif de coupe audit châssis de manière à autoriser la mise en position de travail et la mise en position de transport dudit dispositif de coupe et comprenant au moins deux bielles liées chacune audit dispositif de coupe et audit châssis au moyen d'une liaison respective, l'une desdites liaisons étant une liaison du type rotule.

Une telle machine de coupe est connue par la plupart des machines de coupe, plus précisément par la plupart des faucheuses du type traîné. Ces faucheuses connues comportent dans les grandes lignes un châssis, avec des roues, destiné à être lié à un véhicule moteur au moyen d'un timon. Au châssis est lié un dispositif de coupe au moyen d'un dispositif de liaison contenant des bielles inférieures. Chaque bielle inférieure est liée d'une part au dispositif de coupe au moyen d'une liaison du type rotule et d'autre part au châssis au moyen d'une liaison qui est également du type rotule en position de travail. Les bielles et les liaisons du type rotule permettent avantageusement au dispositif de coupe d'avoir un mouvement relatif par rapport au châssis de manière à autoriser audit dispositif de coupe de suivre le relief du terrain. Chaque liaison du type rotule comporte une partie sphérique guidée dans une partie concave et un dispositif de graissage qui permet d'introduire un film lubrifiant entre ladite partie sphérique et ladite partie concave. Pour assurer un bon fonctionnement du dispositif de coupe et de son allégement, il est nécessaire de graisser régulièrement les liaisons du type rotule. Il est d'autant plus important de graisser ces liaisons du fait qu'elles sont fréquemment exposées à la poussière ou à l'humidité et aux projections de la terre.

Chaque liaison comporte en outre un axe qui traverse la partie sphérique correspondante et qui permet d'amener, au moyen d'un dispositif de manoeuvre, le dispositif de coupe d'une position de travail dans laquelle il repose sur le sol, à une position de transport dans laquelle il s'étend au-dessus dudit sol ou inversement.

Les dispositifs de graissage de ces liaisons sont relativement difficiles d'accès ce qui fait que dans bien souvent des cas leur graissage est négligé.

De telles liaisons de type rotule doivent être soumises à un minimum de mouvement pour éviter qu'elles ne grippent lorsqu'elles sont immobiles trop longtemps. En effet, il est fréquent de voir au début de la saison de coupe que le dispositif de coupe de la faucheuse soit très difficile à manipuler d'une position de transport dans une position de travail ou inversement et ne suit plus correctement le relief du terrain.

La demande de brevet FR-A-2 110 911 se rapporte à une machine de coupe avec des outils de fauchage portés par une poutre qui est reliée à un bâti au moyen d'un système de bielles. Ce système de bielles peut comporter des articulations doubles, des joints de cardan, des articulations à rotules ou des articulations avec tampons de caoutchouc qui permettent à la poutre d'exécuter, outre un mouvement vertical ascendant et descendant, un mouvement d'oscillation transversal dans un plan vertical perpendiculaire à la direction de marche. De tels tampons ne permettent d'obtenir par déformation que des déplacements d'amplitudes très limitées.

Le but de la présente invention est de remédier aux inconvénients des machines de coupe de l'art antérieur tout en cherchant à obtenir une solution simple et peu onéreuse.

A cet effet, la machine de coupe selon l'invention est caractérisée en ce que l'une au moins des liaisons liant une bielle au dispositif de coupe ou au châssis se compose d'une bague sur l'extérieur de laquelle est fixé un élément élastique et au travers de laquelle s'étend un axe avec un léger jeu de fonctionnement qui autorise un mouvement relatif entre ladite bague et ledit axe.

L'invention concerne également les caractéristiques suivantes considérées isolément ou dans toutes leurs combinaisons techniquement possibles :
- l'élément élastique est réalisé en un élastomère naturel ou synthétique ;
- l'élément élastique est fixé sur la bague par vulcanisation ;
- la bague est réalisée en matière plastique et l'axe correspondant est réalisé en matière inoxydable ou revêtu en surface d'une matière inoxydable ce qui permet avantageusement de toujours assurer un bon fonctionnement de la liaison et de permettre la mise en position de travail ou de transport du dispositif de coupe ;
- la bielle comporte un alésage de forme biconique à l'intérieur duquel s'étend l'élément élastique correspondant ;
- l'élément élastique est, sur son pourtour extérieur, de forme biconique sensiblement complémentaire de la forme biconique de l'alésage correspondant de la bielle, ce qui permet avantageusement d'assurer un bon maintient dudit élément élastique dans l'alésage correspondant de ladite bielle ;
- l'alésage prévu dans la bielle est brut de forge ou de fonderie, ce qui permet avantageusement de limiter le prix de revient ;
- le dispositif de coupe comporte une première extrémité latérale inférieure aux alentours de laquelle est liée une première bielle inférieure au moyen d'une première liaison et une deuxième extrémité latérale inférieure aux alentours de laquelle est liée une deuxième bielle inférieure au moyen d'une deuxième liaison ;
- le châssis comporte une première extrémité latérale inférieure aux alentours de laquelle est liée la première bielle inférieure au moyen d'une troisième liaison et une deuxième extrémité latérale inférieure aux alentours de laquelle est liée la deuxième bielle inférieure au moyen d'une quatrième liaison ;
- au moins les deux liaisons liant les deux bielles inférieures au dispositif de coupe comportent chacune un organe élastique ;
- au moins les deux liaisons liant les bielles inférieures au châssis comportent chacune un organe élastique :
- il est prévu un dispositif stabilisateur qui interdit au moins sensiblement au dispositif de coupe de se déplacer transversalement à la direction d'avance ;
- le dispositif stabilisateur est constitué par l'une des bielles inférieures dont la liaison la liant au dispositif de coupe ou au châssis comporte un deuxième élément élastique de sorte que les deux éléments élastiques forment une liaison du type pivot.

D'autres objets, caractéristiques et avantages de l'invention apparaissent dans la description suivante avec référence aux dessins annexés qui représentent, à titre d'exemple non limitatif, une forme de réalisation de la machine de coupe selon l'invention.

Sur ces dessins :
- la **figure 1** représente une vue de dessus d'une machine de coupe sur laquelle ont été effectuées quelques coupes partielles ;
- la **figure 2** est une vue de côté suivant la flèche II définie sur la figure 1 ;
- la **figure 3** est une vue en coupe partielle suivant le plan III-III défini sur la figure 2 ;
- la **figure 4** représente les mêmes éléments que la figure 3 dans une autre position ;
- la **figure 5** représente une extrémité de bielle seule suivant une coupe transversale ;
- la **figure 6** représente un élément élastique avec une bague correspondante.

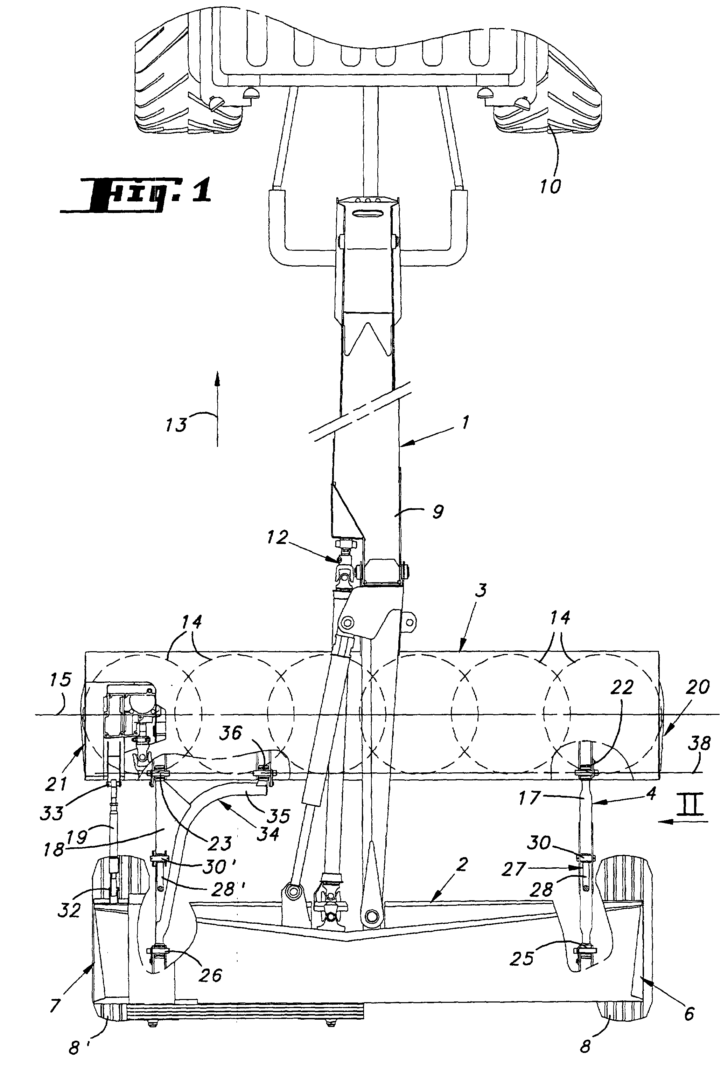

La figure 1 montre une machine de coupe (1) comportant, selon l'exemple de réalisation représenté, un châssis (2) et un dispositif de coupe (3) lié audit châssis (2) au moyen d'un dispositif de liaison (4).

Le châssis (2) comporte à chacune de ses extrémités latérales (6, 7) une roue (8, 8') au moyen desquelles il repose sur le sol (S). Aux alentours de la partie centrale dudit châssis (2) est lié un timon (9) qui permet de lier le châssis (2) à un véhicule moteur (10), lequel est d'une part destiné à entraîner le dispositif de coupe (3) au moyen d'un dispositif d'entraînement (12) et d'autre part à déplacer la machine de coupe (1) suivant le sens d'avance (13).

Dans la suite de la description, les notions suivantes : "avant", "arrière", "devant" et "derrière" sont définies par rapport à ce sens d'avance (13) et les notions "droite" et "gauche" sont définies en regardant la machine de coupe (1) de l'arrière dans le sens d'avance (13).

Le dispositif de coupe (3) est, selon l'exemple de réalisation représenté, destiné à couper du produit sur pied. Pour ce faire, le dispositif de coupe (3) comporte un certain nombre d'éléments de coupe (14) agencés l'un à côté de l'autre suivant une ligne transversale (15) au sens d'avance (13) et destinés chacun à être animés en rotation autour d'un axe s'étendant vers le haut au moyen du dispositif d'entraînement (12).

Ce dispositif de coupe (3) est destiné à occuper une position de transport dans laquelle il s'étend au-dessus du sol (S) et une position de travail dans laquelle ledit dispositif de coupe (3) repose au moins sensiblement sur le sol (S). Pour assurer une bonne coupe du produit sur pied, le dispositif de coupe (3) doit suivre le relief du terrain. A cet effet, le dispositif de liaison (4) comporte, selon l'exemple de réalisation représenté, une première bielle inférieure (17), une deuxième bielle inférieure (18) et une bielle supérieure (19). A la lumière de la figure 1, on voit que le dispositif de coupe (3) comporte également une première extrémité latérale inférieure (20) et une deuxième extrémité latérale inférieure (21) lesquelles sont situées devant les extrémités latérales inférieures (6, 7) correspondantes du châssis (2).

A la lumière de la figure 1, on voit en sus que la première bielle (17) est liée aux alentours de la première extrémité latérale inférieure (20) du dispositif de coupe (3) au moyen d'une première liaison (22) et que la deuxième bielle (18) est liée aux alentours de la deuxième extrémité latérale inférieure (21) dudit dispositif de coupe (3) au moyen d'une deuxième liaison (23).

La première bielle inférieure (17) est également liée aux alentours de la première extrémité latérale inférieure (6) du châssis (2) au moyen d'une troisième liaison (25) et la deuxième bielle inférieure (18) est en outre liée aux alentours de la deuxième extrémité latérale inférieure (7) dudit châssis (2) au moyen d'une quatrième liaison (26). A la lumière de la figure 1, on voit en outre que les deux bielles inférieures (17, 18) s'étendent sensiblement parallèlement entre-elles et suivant le sens d'avance (13).

Pour amener le dispositif de coupe (3) de la position de transport dans la position de travail ou inversement, la machine de coupe (1) comporte un dispositif de manoeuvre (27) comportant, selon l'exemple de réalisation représenté, deux vérins (28, 28').

Selon l'exemple de réalisation représenté, chaque vérin (28, 28') est d'une part lié à l'extrémité latérale inférieure (6, 7) correspondante du châssis (2) au moyen d'une première articulation (29, 29') (l'articulation (29') n'étant pas représentée) et d'autre part lié à la bielle inférieure correspondante (17, 18) située à l'extrémité latérale inférieure (20, 21) correspondante du dispositif de coupe (3) au moyen d'une deuxième articulation (30, 30').

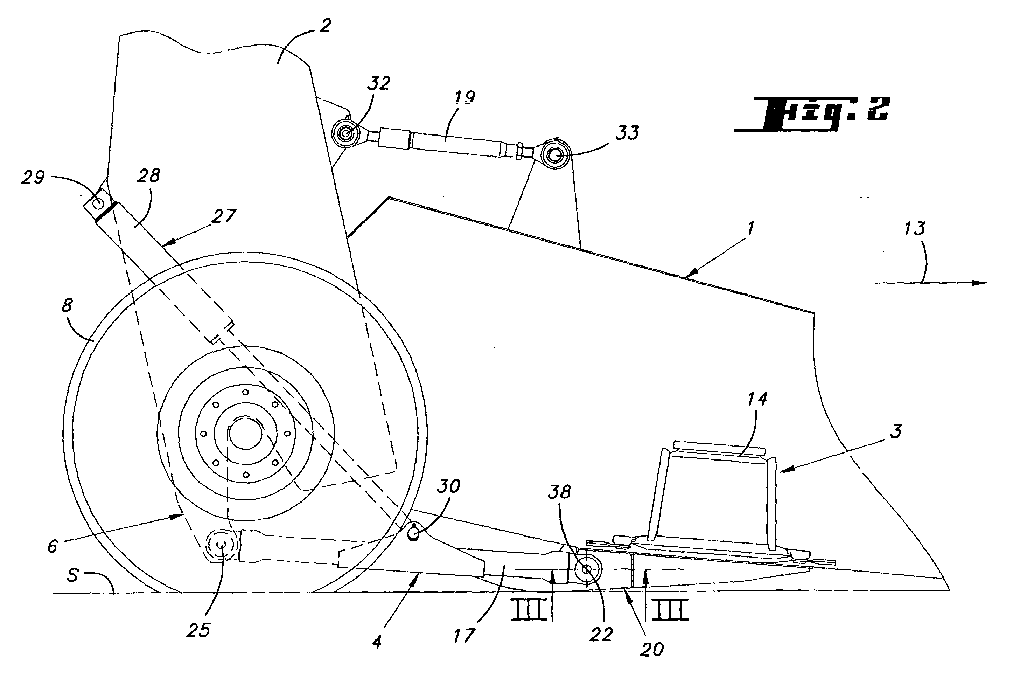

Sur la figure 2, on voit que la deuxième articulation (30) liant le vérin (28) à la première bielle inférieure (17) est sensiblement située à mi-chemin entre la première liaison (22) et la troisième liaison (25) décrites précédemment.

On notera que l'autre vérin (28') est lié de la même manière à la deuxième bielle inférieure (18). Lorsque l'opérateur commande le dispositif de manoeuvre (27), les vérins (28, 28') se raccourcissent ce qui a pour effet de faire pivoter les bielles inférieures (17, 18) vers le haut autour de leur liaison (25, 26) respective et donc de dégager le dispositif de coupe (3) du sol (S) à l'aide de la bielle supérieure (19) qui évite que ledit dispositif de coupe (3) ne pivote de trop autour des articulations (22, 23). Pour ce faire, la bielle supérieure (19) est située plus haut que les bielles inférieures (17, 18) et est liée d'une part au châssis (2) au moyen d'une troisième articulation (32) du type rotule et d'autre part au dispositif de coupe (3) au moyen d'une quatrième articulation (33) qui est également du type rotule.

A la lumière de la figure 1, on remarquera qu'il est en outre prévu un dispositif stabilisateur (34) qui interdit au moins sensiblement au dispositif de coupe (3) de se déplacer transversalement à la direction d'avance (13). A cet effet, est prévue une troisième bielle inférieure (35) qui est d'une part fixée à la deuxième bielle inférieure (18) et qui est d'autre part liée au dispositif de coupe (3) au moyen d'une cinquième liaison (36).

On remarquera que cette cinquième liaison (36) est située entre la deuxième liaison (23) et la première liaison (22) et que ces trois liaisons (22, 23, 36) sont alignées suivant une droite (38) sensiblement horizontale et orthogonale à la direction d'avance (13). Ce dispositif stabilisateur (34) est donc principalement constitué par la deuxième bielle inférieure (18) et la troisième bielle inférieure (35).

On notera que, selon cet exemple de réalisation représenté, les liaisons (22, 23, 25, 26, 36) sont des liaisons du type rotule comportant chacune un élément élastique respectif. Ces liaisons (22, 23, 25, 26, 36) sont au moins sensiblement identiques et pour une question de clarté, seule la première liaison (22) sera décrite plus en détail.

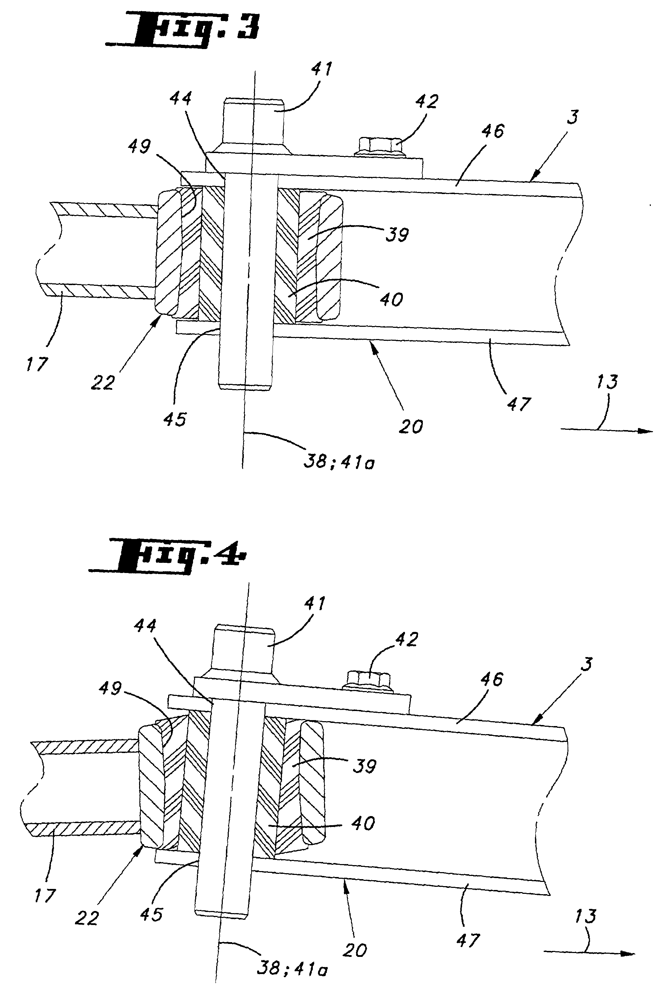

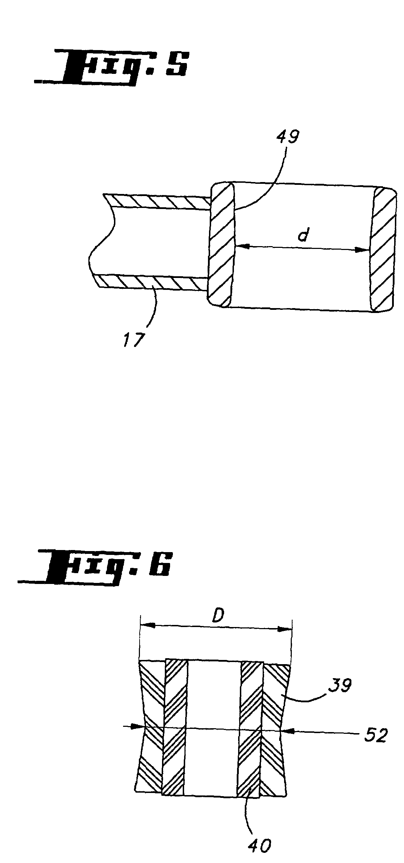

A cet effet, on voit à la lumière des figures 3 et 4 la première liaison en coupe. Cette première liaison (22) comporte, comme décrit précédemment, un élément élastique (39) qui peut être réalisé en élastomère naturel ou synthétique. Cette première liaison (22) comporte en sus une bague (40) en matière plastique de forme cylindrique sur l'extérieur de laquelle est fixé l'élément élastique (39) par vulcanisation et au travers de laquelle s'étend un axe (41) d'axe longitudinal (41a) et réalisé en une matière inoxydable.

Entre l'axe (41) et la bague (40) est prévu un faible jeu de fonctionnement qui autorise un mouvement relatif (dans ce cas de figure un pivotement) entre ladite bague (40) et ledit axe (41). Ce pivotement entre la bague (40) et l'axe (41) permet à la première bielle inférieure (17) et à la deuxième bielle inférieure (18) de pivoter autour des axes longitudinaux (41a) respectifs et autorise de cette manière la mise en position de travail et de transport du dispositif de coupe (3).

Une telle bague (40) en matière plastique au travers de laquelle s'étend un axe (41) en matière inoxydable comme par exemple un axe en chrome, permet avantageusement d'obtenir un très bon rendement de cette première liaison (22) qui dure dans le temps et qui ne demande aucun entretien, ce qui permet de toujours assurer une mise en position de travail et de transport du dispositif de coupe (3) ainsi qu'une bonne adaptation au sol (S) de ce dernier.

A la lumière des figures 3 et 4, on voit encore que l'axe (41) est fixé au dispositif de coupe (3) au moyen d'une vis (42) et que ledit axe (41) s'étend au travers de deux trous (44, 45) prévus dans deux ailes (46, 47) dudit dispositif de coupe (3). La bague (40) s'étend, quant à elle, entre les deux ailes (46, 47) qui forment une chape.

L'élément élastique (39) est logé dans un alésage (49) correspondant prévu dans la première bielle inférieure (17). A cet effet, on voit à la lumière de la figure 5 que l'alésage (49) est de forme biconique dont le diamètre intérieur le plus petit (50) est situé au moins sensiblement au centre dudit alésage (49). Cet alésage (49) prévu dans la première bielle inférieure (17) peut être brut de forge ou de fonderie selon le mode de réalisation de ladite première bielle inférieure (17), ce qui permet avantageusement de réduire considérablement le coût de revient de la première liaison (22).

A la lumière de la figure 6, on voit l'élément élastique (39) et la bague (40) seules. On remarquera que l'élément élastique (39) est sur son pourtour extérieur (51) de forme biconique sensiblement complémentaire de la forme biconique de l'alésage (49) correspondant de la première bielle inférieure (17). Le plus petit diamètre extérieur (52) de la forme biconique de l'élément élastique (39) est situé au moins sensiblement au centre dudit élément élastique (39). De telles formes biconiques de l'alésage (49) et de l'élément élastique (39) permettent, lorsque ledit élément élastique (39) et la bague (40) correspondante sont montés dans l'alésage (49) de la première bielle inférieure (17), de fixer suffisamment ledit élément élastique (39) à ladite première bielle inférieure (17).

On notera que, lorsque l'élément élastique (39) et la bague (40) sont démontés de la première bielle inférieure (17), le diamètre extérieur (D) dudit élément élastique (39) est largement supérieur au diamètre intérieur (d) de l'alésage (49). A cet effet, l'élément élastique (39) et la bague (40) sont montés dans l'alésage (49) de la première bielle inférieure (17) par serrage à l'aide d'une presse par exemple. Chaque liaison (22, 23, 25, 26, 36) permet ainsi, au moyen de l'élément élastique (39) correspondant, un mouvement relatif du type rotulant de la bielle inférieure (17, 18, 35) correspondante par rapport aux ailes (46, 47) correspondantes du châssis (2) et du dispositif de coupe (3). A cet effet, lors d'un tel mouvement relatif, l'élément élastique (39) se déforme tel que représenté sur la figure 4. Chaque liaison (22, 23, 25, 26, 36) autorise donc d'une part un pivotement de la bielle inférieure (17, 18, 35) correspondante par rapport au châssis (2) et par rapport au dispositif de coupe (3) autour de l'axe longitudinal (4 la) de l'axe (41) correspondant et d'autre part un mouvement rotulant de ladite bielle inférieure (17, 18, 35) par rapport audit châssis (2) et par rapport audit dispositif de coupe (3).

On notera toutefois que la deuxième liaison (23) liant la deuxième bielle inférieure (18) au dispositif de coupe (3) et la cinquième liaison (36) liant la troisième bielle inférieure (35) audit dispositif de coupe (3) comporte chacune, comme décrit précédemment, un élément élastique (39) respectif mais forment ensemble une liaison du type pivot d'axe longitudinal (41a, 38). Cette liaison du type pivot interdit au dispositif de coupe (3) de flotter transversalement par rapport à la direction d'avance (13).

Finalement, différentes modifications restent possibles, notamment en ce qui concerne la constitution des divers éléments ou par substitution d'équivalents techniques, sans pour autant sortir du domaine de protection défini dans les revendications.

Il est notamment parfaitement possible d'équiper les liaisons (22, 23, 25, 26, 36) d'un axe qui est uniquement revêtu en surface d'une matière inoxydable ce qui permet avantageusement de baisser le coût de revient desdites liaisons (22, 23, 25, 26, 36).

Il est également parfaitement possible de disposer la troisième bielle inférieure (35) du dispositif stabilisateur (34) d'une autre manière pour obtenir le même effet. Ainsi, il est par exemple parfaitement possible de fixer d'une part la troisième bielle inférieure (35) à la deuxième bielle inférieure (18) et de lier d'autre part ladite troisième bielle inférieure (35) au châssis (2) au moyen d'une autre liaison.

## Revendications

1. Machine de coupe comportant :
- un châssis (2) destiné à être lié à un véhicule moteur (10) ;
- un dispositif de coupe (3) comprenant des organes de coupe (14) et étant destiné à occuper :
* au moins une position de travail dans laquelle il repose au moins sensiblement sur le sol (S) et dans laquelle il est destiné à suivre le relief dudit sol (S),
* au moins une position de transport dans laquelle il s'étend au-dessus dudit sol (S),
- un dispositif de liaison (4) liant ledit dispositif de coupe (3) audit châssis (2) de manière à autoriser la mise en position de travail et la mise en position de transport dudit dispositif de coupe (3) et comprenant au moins deux bielles (17, 18, 19) liées chacune audit dispositif de coupe (3) et audit châssis (2) au moyen d'une liaison (22, 23, 25, 26, 32, 33) respective, l'une au moins desdites liaisons (22, 23, 25, 26, 32, 33) liant une bielle (17, 18, 19) audit dispositif de coupe (3) ou audit châssis (2) étant une liaison du type rotule, ***caractérisée en ce* que** ladite liaison se compose d'une bague (40) sur l'extérieur de laquelle est fixé un élément élastique (39) et au travers de laquelle s'étend un axe (41) avec un léger jeu de fonctionnement qui autorise un mouvement relatif entre ladite bague (40) et ledit axe (41).

2. Machine de coupe selon la revendication 1, ***caractérisée en ce* que** l'élément élastique (39) est réalisé en élastomère naturel ou synthétique.

3. Machine de coupe selon la revendication 1 ou 2, ***caractérisée en ce* que** l'élément élastique (39) est fixé sur la bague (40) par vulcanisation.

4. Machine de coupe selon la revendication 1 ou 3, ***caractérisée en ce* que** la bague (40) est réalisée en matière plastique et que l'axe (41) correspondant est réalisé en matière inoxydable ou revêtu en surface d'une matière inoxydable.

5. Machine de coupe selon l'une quelconque des revendications 1 à 4, ***caractérisée en ce* que** chaque bielle (17, 18) comporte un alésage (49) de forme biconique à l'intérieur duquel s'étend l'élément élastique (39) correspondant.

6. Machine de coupe selon la revendication 5, ***caractérisée en ce* que** l'élément élastique (39) est, sur son pourtour extérieur, de forme biconique sensiblement complémentaire de la forme biconique de l'alésage (49) correspondant de la bielle (17, 18).

7. Machine de coupe selon la revendication 5 ou 6, ***caractérisée en ce* que** l'alésage (49) prévu dans la bielle (17, 18) est brut de forge ou de fonderie.

8. Machine de coupe selon l'une quelconque des revendications 1 à 7, ***caractérisée en ce* que** le dispositif de coupe (3) comporte :
- une première extrémité latérale inférieure (20) aux alentours de laquelle est liée une première bielle inférieure (17) au moyen d'une première liaison (22) ;
- une deuxième extrémité latérale inférieure (21) aux alentours de laquelle est liée une deuxième bielle inférieure (18) au moyen d'une deuxième liaison (23).

9. Machine de coupe selon l'une quelconque des revendications 1 à 8, ***caractérisée en ce* que** le châssis (2) comporte :
- une première extrémité latérale inférieure (6) aux alentours de laquelle est liée la première bielle inférieure (17) au moyen d'une troisième liaison (25);
- une deuxième extrémité latérale inférieure (7) aux alentours de laquelle est liée la deuxième bielle inférieure (18) au moyen d'une quatrième liaison (26).

10. Machine de coupe selon la revendication 8, ***caractérisée en ce* que** au moins les deux liaisons (22, 23) liant les deux bielles inférieures (17, 18) au dispositif de coupe (3) comportent chacune un élément élastique (39).

11. Machine de coupe selon la revendication 9, ***caractérisée en ce* que** au moins les deux liaisons (25, 26) liant les deux bielles inférieures (17, 18) au châssis (2) comportent chacune un élément élastique (39).

12. Machine de coupe selon l'une quelconque des revendications 1 à 11, ***caractérisée en ce* qu'**il est prévu un dispositif stabilisateur (34) qui interdit au moins sensiblement au dispositif de coupe (3) de se déplacer transversalement à la direction d'avance (13).

13. Machine de coupe selon la revendication 10 ou 11 prise en combinaison avec la revendication 12, ***caractérisée en ce* que** le dispositif stabilisateur (34) est constitué par l'une des bielles inférieures (18, 17) dont la liaison (22, 23, 25, 26) la liant au dispositif de coupe (3) ou au châssis (2) comporte un deuxième élément élastique de sorte que les deux éléments élastiques forment une liaison du type pivot.

## Patentansprüche

1. Schneidmaschine, die
- einen Rahmen (2), der mit einem Motorfahrzeug (10) verbunden werden soll;
- eine Schneidvorrichtung (3), die Schneidelemente (14) aufweist und:
* mindestens eine Arbeitsstellung, in der sie zumindest im Wesentlichen auf dem Boden (S) aufliegt und in der sie dem Profil des Bodens (S) folgen soll,
* mindestens eine Transportstellung, in der sie sich über dem Boden (S) erstreckt,
einnehmen soll,
- eine Verbindungsvorrichtung (4), die die Schneidvorrichtung (3) so mit dem Rahmen (2) verbindet, dass die Schneidvorrichtung (3) in Arbeitsstellung und in Transportstellung angeordnet werden kann, und mindestens zwei Stangen (17, 18, 19) umfasst, die jeweils mittels einer jeweiligen Verbindung (22, 23, 25, 26, 32, 33) mit der Schneidvorrichtung (3) und mit dem Rahmen (2) verbunden sind, wobei mindestens eine der Verbindungen (22, 23, 25, 26, 32, 33), die eine Stange (17, 18, 19) mit der Schneidvorrichtung (3) oder dem Rahmen (2) verbindet, eine der Art Kugelgelenkverbindung ist,
umfasst, ***dadurch gekennzeichnet,* dass** die Verbindung aus einem Ring (40) besteht, an dessen Außenseite ein elastisches Element (39) befestigt ist und durch den sich eine Achse (41) mit einem geringen Betriebsspiel erstreckt, das eine Relativbewegung zwischen dem Ring (40) und der Achse (41) gestattet.

2. Schneidmaschine nach Anspruch 1, ***dadurch gekennzeichnet,* dass** das elastische Element (39) aus einem natürlichen oder einem synthetischen Elastomer hergestellt ist.

3. Schneidmaschine nach Anspruch 1 oder 2, ***dadurch gekennzeichnet,* dass** das elastische Element (39) durch Vulkanisierung an dem Ring (40) befestigt ist.

4. Schneidmaschine nach Anspruch 1 oder 3, ***dadurch gekennzeichnet,* dass** der Ring (40) aus einem Kunststoffmaterial hergestellt ist und dass die entsprechende Achse (41) aus einem nichtoxydierenden Material hergestellt oder auf der Oberfläche mit einem nichtoxydierenden Material beschichtet ist.

5. Schneidmaschine nach irgend einem der Ansprüche 1 bis 4, ***dadurch gekennzeichnet,* dass** jede Stange (17, 18) eine doppelkonische Bohrung (49) aufweist, in deren Inneren sich das entsprechende elastische Element (39) erstreckt.

6. Schneidmaschine nach Anspruch 5, ***dadurch gekennzeichnet,* dass** das elastische Element (39) an seinem Außenumfang eine doppelkonische Form aufweist, die im Wesentlichen komplementär zur doppelkonischen Form der entsprechenden Bohrung (49) der Stange (17, 18) ist.

7. Schneidmaschine nach Anspruch 5 oder 6, ***dadurch gekennzeichnet,* dass** die in der Stange (17, 18) vorgesehene Bohrung (49) roh geschmiedet oder roh gegossen ist.

8. Schneidmaschine nach irgend einem der Ansprüche 1 bis 7, ***dadurch gekennzeichnet,* dass** die Schneidvorrichtung (3):
- ein erstes unteres Seitenende (20), in dessen Nähe eine erste untere Stange (17) mittels einer ersten Verbindung (22) verbunden ist;
- ein zweites unteres Seitenende (21), in dessen Nähe eine zweite untere Stange (18) mittels einer zweiten Verbindung (23) verbunden ist aufweist.

9. Schneidmaschine nach irgend einem der Ansprüche 1 bis 8, ***dadurch gekennzeichnet,* dass** der Rahmen (2):
- ein erstes unteres Seitenende (6), in dessen Nähe die erste untere Stange (17) mittels einer dritten Verbindung (25) verbunden ist;
- ein zweites unteres Seitenende (7), in dessen Nähe die zweite untere Stange (18) mittels einer vierten Verbindung (26) verbunden ist, aufweist.

10. Schneidmaschine nach Anspruch 8, ***dadurch gekennzeichnet,* dass** mindestens die beiden Verbindungen (22, 23), die die beiden unteren Stangen (17, 18) mit der Schneidvorrichtung (3) verbinden, jeweils ein elastisches Element (39) aufweisen.

11. Schneidmaschine nach Anspruch 9, ***dadurch gekennzeichnet,* dass** mindestens die beiden Verbindungen (25, 26), die die beiden unteren Stangen (17, 18) mit dem Rahmen (2) verbinden, jeweils ein elastisches Element (39) aufweisen.

12. Schneidmaschine nach irgend einem der Ansprüche 1 bis 11, ***dadurch gekennzeichnet,* dass** eine Stabilisiervorrichtung (34) vorgesehen ist, die zumindest im Wesentlichen verhindert, dass sich die Schneidvorrichtung (3) quer zur Fahrtrichtung (13) bewegt.

13. Schneidmaschine nach Anspruch 10 oder 11 in Kombination mit Anspruch *12,* ***dadurch gekennzeichnet,* dass** die Stabilisiervorrichtung (34) durch eine der unteren Stangen (18, 17) gebildet wird, deren Verbindung (22, 23, 25, 26), die sie mit der Schneidvorrichtung (3) oder dem Rahmen (2) verbindet, ein zweites elastisches Element aufweist, so dass die beiden elastischen Elemente eine Gelenkzapfenverbindung bilden.

## Claims

1. Cutting machine comprising:
- a chassis (2) intended to be connected to a motor vehicle (10);
- a cutting device (3) comprising cutting elements (14) and intended to occupy:
* at least one work position in which it rests at least approximately on the ground (S) and in which it is intended to follow the relief of the said ground (S),
* at least one transport position in which it extends above the said ground (S),
- a connecting device (4) connecting the said cutting device (3) to the said chassis (2) in such a way as to allow the said cutting device (3) to be brought into the work position and brought into the transport position and comprising at least two connecting-rods (17, 18, 19) each one connected to the said cutting device (3) and to the said chassis (2) by means of a respective connection (22, 23, 25, 26, 32, 33), one at least of the said connections (22, 23, 25, 26, 32, 33) connecting a connecting-rod (17, 18, 19) to the said cutting device (3) or to the said chassis (2) being a connection of the ball-joint type;
***characterized in* that** the said connection is composed of a ring (40) to the outside of which an elastic element (39) is fixed and through which ring (40) a spindle (41) extends with a slight operating clearance that permits relative movement between the said ring (40) and the said spindle (41).

2. Cutting machine according to Claim 1, ***characterized in* that** the elastic element (39) is made of a natural or synthetic elastomer.

3. Cutting machine according to Claim 1 or 2, ***characterized in* that** the elastic element (39) is fixed to the ring (40) by vulcanizing.

4. Cutting machine according to Claim 1 or 3, ***characterized in* that** the ring (40) is made of plastic and **in that** the corresponding spindle (41) is made of a non-corrodible material or is surface-coated with a non-corrodible material.

5. Cutting machine according to any one of Claims 1 to 4, ***characterized in* that** each connecting-rod (17, 18) comprises a bore (49) of biconical shape, inside which the corresponding elastic element (39) extends.

6. Cutting machine according to Claim 5, ***characterized in* that**, on its exterior periphery, the elastic element (39) is of biconical shape, approximately complementing the biconical shape of the corresponding bore (49) in the connecting-rod (17, 18).

7. Cutting machine according to Claim 5 or 6, ***characterized in* that** the bore (49) made in the connecting-rod (17, 18) is forged or cast in.

8. Cutting machine according to any one of Claims 1 to 7, ***characterized in* that** the cutting device (3) comprises:
- a first lower lateral end (20), to the vicinity of which a first lower connecting-rod (17) is connected by means of a first connection (22);
- a second lower lateral end (21), to the vicinity of which a second lower connecting-rod (18) is connected by means of a second connection (23).

9. Cutting machine according to any one of Claims 1 to 8, ***characterized in* that** the chassis (2) comprises:
- a first lower lateral end (6), to the vicinity of which the first lower connecting-rod (17) is connected by means of a third connection (25);
- a second lower lateral end (7), to the vicinity of which the second connecting-rod link (18) is connected by means of a fourth connection (26).

10. Cutting machine according to Claim 8, ***characterized in* that** at least the two connections (22, 23) connecting the two lower connecting-rods (17, 18) to the cutting device (3) each comprise an elastic element (39).

11. Cutting machine according to Claim 9, ***characterized in* that** at least the two connections (25, 26) connecting the two lower connecting-rods (17, 18) to the chassis (2) each comprise an elastic element (39).

12. Cutting machine according to any one of Claims 1 to 11, ***characterized in* that** there is a stabilizer device (34) which at least substantially prevents the cutting device (3) from moving transversely to the direction of forward travel (13).

13. Cutting machine according to Claims 10 or 11 taken in combination with Claim 12, ***characterized in* that** the stabilizing device (34) consists of one of the lower connecting-rods (18, 17) of which the connection (22, 23, 25, 26) connecting it to the cutting device (3) or to the chassis (2) comprises a second elastic element so that the two elastic elements form a connection of the pivot type.
